# EUROPÄISCHE PATENTSCHRIFT

(11) **EP 2 333 507 B1**
(45) Veröffentlichungstag und Bekanntmachung des Hinweises auf die Patenterteilung: **06.04.2016**
(21) Anmeldenummer: 10014641.4
(22) Anmeldetag: 16.11.2010
(51) Int. Cl.: G01L 1/14, G01N 3/00, G01M 99/00

(54) **Verfahren zur Ermittlung eines Lebensdauerverbrauchs von thermisch und/oder mechanisch hoch beanspruchten Bauteilen**
Method for determining service life consumption of components subjected to high thermal and/or mechanical loads
Procédé d'établissement d'une consommation de la durée de vie de composants à forte sollicitation thermique et/ou mécanique

(30) Priorität: 09.12.2009 DE 102009057135
(43) Veröffentlichungstag der Anmeldung: 15.06.2011
(73) Patentinhaber: RWE Power Aktiengesellschaft, 45128 Essen (DE)
(72) Erfinder: Mohrmann, Ralf, 45239 Essen (DE)
(74) Vertreter: Kierdorf Ritschel Richly

(56) Entgegenhaltungen:
- EP-A1- 0 949 481
- US-A1- 2009 188 324
- US-A1- 2009 249 885
- B HAHN, G BÜHL, J WEBER, D NERGER: "In-service Condition Monitoring of Piping Systems in Power Plants Requirements and Advanced Techniques", POWER PLANT: OPERATION MAINTENANCE AND MATERIALS ISSUES, Bd. 1, Nr. 1, 7. August 2004 (2004-08-07), Seiten 1-13, XP002626949, Surrey ISSN: 1740-5181
- WEBER J ET AL: "A new method of strength calculation and lifetime prediction of pipe bends operating in the creep range", INTERNATIONAL JOURNAL OF PRESSURE VESSELS AND PIPING, ELSEVIER SCIENCE PUBLISHERS, BARKING, GB, Bd. 82, Nr. 2, 1. Februar 2005 (2005-02-01), Seiten 77-84, XP025282258, ISSN: 0308-0161, DOI: DOI:10.1016/J.IJPVP.2004.07.019 [gefunden am 2005-02-01]
- LI ET AL: "Interdigital capacitive strain gauges fabricated by direct-write thermal spray and ultrafast laser micromachining", SENSORS AND ACTUATORS A, ELSEVIER SEQUOIA S.A., LAUSANNE, CH, Bd. 133, Nr. 1, 20. Dezember 2006 (2006-12-20), Seiten 1-8, XP005809088, ISSN: 0924-4247, DOI: DOI:10.1016/J.SNA.2006.04.008
- Y. JIA, K. SUN, F.J. AGOSTO, M. TOLEDO-QUINONES: "Design and characterization of a passive wireless strain sensor", MEASUREMENT SCIENCE AND TECHNOLOGY, Bd. 17, 28. September 2006 (2006-09-28), Seiten 2869-2876, XP002626950, DOI: 10.1088/0957-0233/17/11/002

## Beschreibung

Die Erfindung betrifft ein Verfahren zur Ermittlung eines Lebensdauerverbrauchs von thermisch und/oder mechanisch hoch beanspruchten Bauteilen, insbesondere von thermisch und/oder mechanisch hoch beanspruchten Rohren, wie beispielsweise Frischdampfleitungen oder Formstücke einer Kraftwerksanlage.

Der Lebensdauerverbrauch von thermisch und/oder mechanisch beanspruchten Bauteilen wird anhand der Materialermüdung bestimmt. Die Materialermüdung beschreibt einen langsam voranschreitenden Schädigungsprozess in dem Werkstoff unter Umgebungseinflüssen wie beispielsweise wechselnde mechanische Belastung oder wechselnde Temperatur. In diesem Zusammenhang beschreibt die Dauerfestigkeit die Belastungsgrenze, die ein dynamisch belasteter Werkstoff ohne nennenswerte Ermüdungserscheinungen bzw. Ausfallerscheinungen (elastische Dehnungen) ertragen kann. Bei Belastungen oberhalb der Dauerfestigkeit treten deutliche Ermüdungserscheinungen (plastische Dehnungen) auf, wobei eine bestimmte Anzahl von Lastwechseln zum Bruch des Werkstoffs führt.

Bei neuen überkritisch befeuerten Dampfkesselanlagen werden die Frischdampfleitungen sowie die Leitungen der heißen Zwischenüberhitzung hohen Druck- und Temperaturbelastungen ausgesetzt. Der in den Rohren zirkulierende Dampf wird auf Temperaturen von deutlich über 500°C erhitzt, es herrschen Drücke von bis zu 300 bar vor. In diesem überkritischen Temperaturbereich werden die Rohre nicht mehr im Streckgrenzbereich, sondern im Zeitstandbereich betrieben. Zeitstandfestigkeiten sind zeit- und beanspruchungsabhängige Werkstoffkennwerte, die in sogenannten Lebensdauerkennlinien dargestellt werden können und aus denen die zulässige Betriebszeit oder eine zulässige Materialbeanspruchung oder eine betriebszeitabhängige Materialerschöpfung bestimmt werden kann.

Die Zeitstandsfestigkeit beschreibt die mechanische Spannung, die bei einem Werkstoff nach einer bestimmten Beanspruchungszeit und bei einer konstanten Temperatur oberhalb der sogenannten Übergangstemperatur (ca. 30 % der Schmelztemperatur in Kelvin) zum Bruch führt. Oberhalb der Übergangstemperatur laufen Gefügevorgänge im Werkstoff thermisch aktiviert ab, was mit einer Werkstoffschädigung (plastische Dehnung) und somit auch mit einer Absenkung der Festigkeitswerte verbunden ist, wodurch die Bauteillebensdauer reduziert wird.

Das zeitabhängige Werkstoffverhalten (Festigkeitsabnahme, Erschöpfungszunahme, Restlebensdauerverkürzung) macht insbesondere bei den Rohren der Frischdampfleitung, Formstücken und heißen Zwischenüberhitzung eine regelmäßige Prüfung zur Ermittlung des tatsächlichen Werkstoffzustandes erforderlich.

Dies geschieht entweder durch Probeschneiden von Passstücken und deren Laboruntersuchung, durch Gefügeabdruckentnahme oder in Kombination von beiden Methoden. Hierzu ist unter Umständen eine Außerbetriebnahme des Kessels erforderlich, was aus Gründen des hiermit einhergehenden Produktionsausfalls nicht wünschenswert ist.

Bei bekannter Bauteilbeanspruchung lässt sich die theoretische Materialerschöpfung von thermisch und mechanisch hoch beanspruchten Bauteilen, insbesondere von heißgehenden, unter Mediendruck stehenden Rohren grundsätzlich berechnen bzw. simulieren. Hierzu sind Rechenmodelle bekannt, beispielsweise Finite Elemente Berechnungen, die unter Verwendung der tatsächlichen thermischen und mechanischen Belastungen des Werkstoffs sowie einer gegebenen Werkstofffestigkeit als Randbedingungen eine verhältnismäßig realistische Lebensdauervorhersage für den Werkstoff liefern. In der Regel liefern Finite Elemente Berechnungen Aussagen über das Mittelwertverhalten des Bauteils unter den gegebenen Randbedingungen.

Insbesondere die vom Werkstoffhersteller angegebene Materialfestigkeit bzw. Materialqualität unterliegt üblicherweise Schwankungen der Zeitstandfestigkeit im Bereich beispielsweise von ± 20 %. Solche Schwankungen der Werkstoffqualität können bei Modellrechnungen zu Schwankungen in der Lebensdauererwartung des Bauteils von bis zu einem Faktor 2 führen, so dass es auch Sicherheitsgründen sinnvoll ist, bei einer Modellrechnung immer von der schlechtesten Werkstoffqualität auszugehen, d. h., den Festigkeitswert an der untersten Grenze des Qualitätsstreubandes anzunehmen.

Aus dem Dokument B. Hahn, G. Bühl, J. Weber, D. Nerger "In-service Condition Monitoring of Piping Systems in Power Plants Requirements and Advanced Techniques" erschienen in Power Plant: Operation Maintenance and Materials Issues, Bd. 1, Nr. 1, 7. August 2004, Seiten 1 bis 3, XP-002626949, Surrey, ISSN: 1740-5181 wird ein Verfahren zur Verbesserung der Bewertung des Wartungszustandes und der Lebensdauerbewertung unter Verwendung eines Überwachungssystems für Rohrleitungen beschrieben.

Ein Verfahren zur Erfassung von Deformationen und Spannungszuständen an Bauteilen ist beispielsweise aus der US 2009/0188324 A1 bekannt.

Der Erfindung liegt daher die Aufgabe zugrunde, ein Verfahren zur Ermittlung eines Lebensdauerverbrauchs von thermisch und/oder mechanisch hoch beanspruchten Werkstoffen der eingangs genannten Art hinsichtlich der Vorhersagegenauigkeit zu verbessern.

Die Aufgabe wird erfindungsgemäß gelöst durch ein Verfahren zur Ermittlung des Lebensdauerverbrauchs von thermisch und/oder mechanisch hoch beanspruchten Bauteilen, insbesondere von thermisch und/oder mechanisch hoch beanspruchten Rohren, wie beispielsweise Frischdampf- oder heißen Zwischenüberhitzungsleitungen einer Kraftwerksanlage, umfassend die Berechnung des Werkstoffverhaltens unter Anwendung eines Rechenmodells unter Berücksichtigung der tatsächlichen thermischen und mechanischen Belastungen des Bauteils sowie einer gegebenen Werkstofffestigkeit als Randbedingungen des Modells, wobei das tatsächliche Dehnungsverhalten des Bauteils mittels wenigstens eines auf dem Bauteil angebrachten Dehnungssensors während der Beanspruchungsphasen gemessen wird und die als Randbedingung im Rechenmodell verwendete Werkstofffestigkeit anhand des gemessenen Dehnverhaltens korrigiert wird.

Erfindungsgemäß wird also die Läge des verwendeten Werkstoffs im Qualitätsstreuband bestimmt,

Auf diese Art und Weise erfolgt erfindungsgemäß eine inverse Modellierung, wodurch die Rechengenauigkeit des Rechenmodells vergrößert wird.

Die Messung von Werkstoffdehnungen während Beanspruchungsphasen, insbesondere in Kraftwerkskesseln kann insoweit problematisch sein, als dass dort häufig nicht isotherme Bedingungen vorherrschen. Hinzu kommt, dass nicht isotherme Beanspruchungen des Bauteils, beispielsweise beim An- und Herunterfahren eines Kessels mit einer besonderen Materialbeanspruchung einhergehen, die die Restlebensdauer des Bauteils signifikant verkürzen. Bekannte Dehnungsmesseinrichtungen sind nicht ohne Weiteres dazu geeignet, unter solchen Bedingungen Anwendung zu finden.

Bei bekannten Dehnungsmesseinrichtungen erfolgt eine direkte Verbindung des Dehnungsmesssensors mit einer Analyseelektronik mit Hilfe von zwei isolierten Kabeln, die vom betriebsbelasteten Bauteil (hohe Temperatur und Druck) bis zu dieser Analyseelektronik reichen. Der wesentliche Schwachpunkt dieser Konstruktion ist, dass die Kapazität von Sensor und Kabeln eine vergleichbare Größe haben und somit auch Nutz- und Störsignal eine vergleichbare Größe haben. Die Kapazität der Kabel hängt zusätzlich stark von der Temperatur ab. Deshalb eignet sich diese Messmethode nur für isotherme Bedingungen.

Nach einer bevorzugten Ausführungsform der Erfindung werden die elastischen, thermischen und plastischen Dehnungen des Bauteils mittels wenigstens eines kapazitiven Dehnungssensors gemessen. Der Dehnungssensor besteht dabei aus zwei Platten oder Streifen eines elektrisch leitfähigen Materials, die unabhängig voneinander auf der Oberfläche des Bauteils befestigt werden, wobei die Platten kraftfrei sind. Die Kapazität des Dehnungssensors ändert sich durch die Dehnung der Werkstoffoberfläche. Die beiden Platten oder Streifen sind zum Bauteil hin elektrisch isoliert.

Nach einer besonders bevorzugten Ausführungsform der Erfindung ist der kapazitive Dehnungssensor zur Bildung eines Schwingkreises mit einer ersten Induktivität zusammengeschaltet, wobei der Schwingkreis mittels einer zweiten Induktivität zur Bestimmung der momentanen Resonanzfrequenz anregbar ist (elektromagnetische Kopplung). Die Resonanz des Schwingkreises ist abhängig von der ersten Induktivität und der Kapazität des Dehnungssensors. Da sich lediglich der kapazitive Dehnungssensor infolge der Dehnung des Bauteils ändert, während die Induktivität unabhängig von der Dehnung ist, ist die Resonanz des Schwingkreises proportional zu der Dehnung des Bauteils. Die aktuellen Dehnungen des Bauteils können somit über die aktuelle Resonanzfrequenz des Schwingkreises bestimmt werden. Dazu ist die zweite Induktivität mit einer Auswerteeinrichtung verbunden, die den Schwingkreis mit elektrischer Energie unterschiedlicher Frequenz anregt. Durch die Variation der Frequenz lässt sich die momentane Resonanzfrequenz und somit die momentanen Dehnungen bestimmen.

Nach einer Ausführungsform der Erfindung ist vorgesehen, dass die Auswerteeinheit von dem thermisch und/oder mechanisch hoch beanspruchten Bauteil thermisch und/oder mechanisch getrennt ist. Vorzugsweise hat die Auswerteeinheit keinen direkten Kontakt zu dem mechanisch und/oder thermisch hoch beanspruchten Bauteil und ist in einem gegen das Bauteil isolierten Bereich angeordnet, in welchem niedrige Temperaturen, vorzugsweise Raumtemperatur, vorherrschen. Dadurch wird gewährleistet, dass thermische und/oder mechanische Beanspruchungen des Bauteils keinen Einfluss auf die Auswerteeinrichtung haben.

Erfindungsgemäß kann der kapazitive Dehnungsmesssensor mit einer primären Wicklung eines Transformators (erste und zweite Induktivität) so verschaltet sein, dass sich daraus ein Schwingkreis ergibt. Die sekundäre Wicklung des Transformators (die zweite Induktivität) ist mit der Auswerteeinrichtung verbunden, wobei sowohl die erste als auch die zweite Induktivität sich auf dem Temperaturniveau des Bauteils befinden, wohingegen die Auswerteeinrichtung bei Raumtemperatur angeordnet ist. Der Transformator (die erste und zweite Induktivität) kann über eine isolierte Verkabelung mit der Auswerteeinrichtung verbunden sein.

Zweckmäßigerweise ist wenigstens der für die erste Induktivität eingesetzte Werkstoff gegenüber thermischen und/oder mechanischen Beanspruchungen langzeitstabil. Als besonders zweckmäßig haben sich dabei nickellegierte Drähte und keramische Werkstoffe als Isolator herausgestellt. Die zweite Induktivität kann ebenfalls aus einem Werkstoff bestehen, der gegenüber thermischen und/oder mechanischen Beanspruchen langzeitstabil ist.

Nach einem bevorzugten Ausführungsbeispiel der Erfindung wird die Dehnung des Bauteils nach und/oder während einer Änderung der thermischen und/oder mechanischen Belastung des Bauteils gemessen, insbesondere in der Anfangs- und Endphase der thermischen und/oder mechanischen Belastung, wie beispielsweise dem Anfahren oder Abfahren des Kraftwerkskessels. Das Verfahren gemäß der Erfindung hat insbesondere den Vorzug, dass eine Dehnungsmessung nicht nur bei isothermen Verhältnissen, sondern auch während des An- oder Abfahrens des Kraftwerkskessels durchführbar ist.

Besonders zweckmäßig ist es, wenn das erfindungsgemäße Verfahren kontinuierlich durchgeführt wird.

In den Fällen, in denen zwei oder mehrere thermisch und/oder mechanisch beanspruchte Bauteile aus einer Werkstoffcharge hergestellt werden und diese den selben thermischen und/oder mechanischen Beanspruchungen unterliegen, kann der ermittelte Lebensdauerverbrauch für ein thermisch und/oder mechanisch beanspruchtes Bauteil auf die anderen derselben thermischen und/oder mechanischen Beanspruchungen unterliegenden Bauteile aus der gleichen Werkstoffcharge übertragen werden.

Die Erfindung betrifft weiterhin eine Messanordnung zur Bestimmung des Lebensdauerverbrauchs von thermisch und/oder mechanisch hoch beanspruchten Bauteilen nach dem erfindungsgemäßen Verfahren, insbesondere von thermisch und/oder mechanisch hoch beanspruchten Rohren einer Kraftwerksanlage, umfassend:
- wenigstens einen kapazitiven Dehnungsmesssensor,
- eine erste Induktivität, die mit dem Dehnungsmesssensor zu einem Schwingkreis zusammengeschaltet ist, und
- eine zweite Induktivität, die so angeordnet ist, dass sie die erste Induktivität anregen kann, und
- eine Auswerteeinheit, wobei die Auswerteeinheit so ausgebildet ist, dass sie den Schwingkreis umfassend den kapazitiven Dehnungsmesssensor und die erste Induktivität mit verschiedenen Frequenzen anregen kann, zur Ermittlung der aktuellen Resonanzfrequenz des Schwingkreises und einer daraus resultierenden Bestimmung der aktuellen Dehnung des beanspruchten Bauteils.

Der kapazitive Dehnungsmesssensor kann wenigstens zwei mit Abstand zueinander auf einer Oberfläche des Bauteils zueinander angebrachte, elektrisch leitende Platten oder Streifen umfassen. Der Dehnungsmesssensor bzw. dessen elektrisch leitende Platten oder Streifen sind vorzugsweise bezüglich des Bauteils isoliert.

Es können wenigstens zwei Dehnungsmesssensoren vorgesehen sein, deren kapazitive Elemente vorzugsweise in Form von Platten oder Streifen jeweils um 90° verdreht zueinander angeordnet bzw. angebracht sind, so dass beispielsweise bei Rohren Dehnungen in Umfangsrichtungen und Dehnungen in Längsrichtungen getrennt erfassbar und auflösbar sind.

Nach einer bevorzugten Ausführungsform der Erfindung besteht wenigstens die erste Induktivität aus einem Werkstoff, der gegenüber thermischen und/oder mechanischen Beanspruchungen langzeitstabil ist. Dies hat den Vorteil, dass die thermische und/oder mechanische Beanspruchung die auf den Werkstoff einwirkt keinen Einfluss auf die erste Induktivität hat, wodurch die Messgenauigkeit beeinträchtigt würde. Zweckmäßigerweise ist die erste Induktivität dazu aus einem nickellegierten Draht und einem keramischen Werkstoff als Isolator hergestellt.

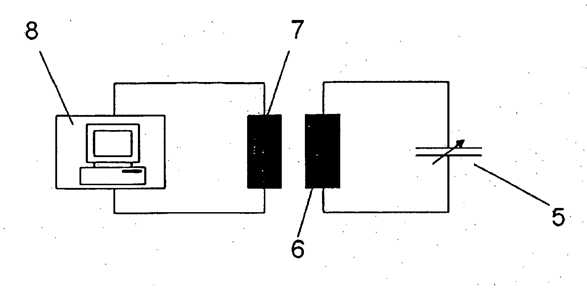

Im Folgenden wird die Erfindung anhand des in der Figur dargestellten Ausführungsbeispiels näher erläutert.

Die Figur zeigt ein Ersatzschaltbild der erfindungsgemäßen Messanordnung. Das Verfahren gemäß der Erfindung umfasst unter anderem die Anwendung eines Finite Elemente-Rechenmodells zur Ermittlung des Lebensdauerverbrauchs des Bauteils.

Als Parameter bzw. als Randbedingung wird die vom Hersteller angegebene Werkstofffestigkeit des Bauteils unter anderem berücksichtigt.

Mittels des nachstehend noch zu beschreibenden Verfahrens wird das tatsächliche Dehnungsverhalten des Bauteils mittels wenigstens eines auf dem Bauteil angebrachten Dehnungsmesssensors während der Beanspruchungsphasen gemessen. Die als Randbedingung in dem Rechenmodell verwendete Werkstofffestigkeit wird anhand des gemessenen Dehnungsverhaltens korrigiert. Anders ausgedrückt wird mittels des auf dem Bauteil angebrachten Dehnungsmesssensors die Lage des für das Bauteil verwendeten Werkstoffs in dem von dem Hersteller angegebenen Qualitätsstreuband ermittelt.

Die Dehnungen des Werkstoffs werden beispielsweise mittels eines kapazitiven Dehnungssensors 5 gemessen, der auf der,Außenwand eines Rohres einer Kraftwerksanlage angebracht ist. Der kapazitive Dehnungssensor 5 ist vorzugsweise zur Bildung eines Schwingkreises mit einer ersten Induktivität 6 zusammengeschaltet. Der Schwingkreis ist mittels einer zweiten Induktivität 7 zur Bestimmung der momentanen Resonanzfrequenz anregbar. Dazu ist die zweite Induktivität 7 mit einer Auswerteeinrichtung 8 verbunden, die den Schwingkreis mit elektrischer Energie unterschiedlicher Frequenz anregt. Sowohl der Dehnungsmesssensor als auch der durch die Induktivitäten 6, 7 gebildete Transformator sind auf Temperaturniveau des Bauteils angeordnet. Über isolierte Kabel ist die Sekundärseite des Transformators bzw. die zweite Induktivität 7 mit der Auswerteeinrichtung 8 verbunden, die mechanisch und thermisch von dem zu messenden Bauteil entkoppelt ist bzw. bei Raumtemperatur angeordnet ist.

Anhand der gemessenen Dehnungen kann das Dehnungsverhalten des Bauteils bestimmt werden, insbesondere durch einen Vergleich der gemessenen Dehnungen nach einer Änderung der thermischen und/oder mechanischen Beanspruchung.

Die Messung der elastischen, thermischen und plastischen Dehnungen des Bauteils wird während des Betriebs des Kraftwerkskessels durchgeführt.

Besonders zweckmäßig ist es, wenn das erfindungsgemäße Verfahren kontinuierlich durchgeführt wird.

Die Messanordnung umfasst einen kapazitiven Dehnungsmesssensor 5, eine erste Induktivität 6, die mit dem Dehnungsmesssensor 5 zu einem Schwingkreis zusammengeschaltet ist, eine zweite Induktivität 7, die so angeordnet ist, dass sie die erste Induktivität 6 Anregen kann (induktive Kopplung), und eine Auswerteeinheit 8.

Die Auswerteeinheit 8 ist so ausgebildet, dass sie den Schwingkreis umfassend den kapazitiven Dehnungsmesssensor 5 und die erste Induktivität 6 mit verschiedenen Frequenzen anregen kann, dazu umfasst die Auswerteeinheit 8 vorzugsweise einen durchstimmbaren Frequenzgenerator (nicht dargestellt).

Anhand der aktuellen Resonanzfrequenz des Schwingkreises ermittelt die Auswerteeinheit 8 die Dehnung des Bauteils. Gemessen wird die Summe aus elastischer, plastischer und thermischer Dehnung. Bei Dehnungsmessungen an einem Rohr kann die Messung der Dehnung sowohl in Umfangsrichtung des Rohres als auch in Längsrichtung des Rohres erfolgen.

Die elastischen, thermischen und plastischen Dehnungen des Bauteils werden mittels des kapazitiven Dehnungsmesssensors 5 erfasst. Dazu bestimmt die Auswerteeinheit 8 mittels des durchstimmbaren Frequenzgenerators die aktuelle Resonanzfrequenz des Schwingkreises. Die Induktivitäten 6, 7 bilden beispielsweise einen Transformator, dessen Primärwicklung an den Dehnungsmesssensor 5 angeschlossen ist, wohingegen die Sekundärwicklung mit der Auswerteeinheit 8 verkabelt ist. Der Transformator befindet sich auf dem Temperaturniveau des Bauteils. Die Dehnungen werden insbesondere nach einer Änderung der thermischen und/oder mechanischen Beanspruchung des Bauteils ermittelt, vorzugsweise kontinuierlich. Die Dehnungen können mit der erfindungsgemäßen Messanordnung allerdings auch bei nicht isothermen Verhältnissen bestimmt werden. Daraus kann das Dehnungsverhalten des hoch beanspruchten Bauteils ermittelt werden.

Die erste Induktivität 6 besteht vorzugsweise aus einem Material, welches gegenüber thermischen und/oder mechanischen Beanspruchungen langzeitstabil ist. Unterliegt die zweite Induktivität 7 ebenfalls der thermischen und/oder mechanischen Beanspruchung, so ist diese ebenfalls aus einem Material hergestellt, welches gegenüber thermischen und/oder mechanischen Beanspruchungen langzeitstabil ist, beispielsweise aus einem nickellegierten Draht und einem keramischen Werkstoff als Isolator. Die Auswerteeinheit 8 ist von der thermischen und/oder mechanischen Beanspruchung des Werkstoffs thermisch und/oder mechanisch getrennt und unterliegt nicht den genannten Beanspruchungen. Vorzugsweise ist die Auswerteeinheit 8 thermisch isoliert von der Messanordnung, vorzugsweise bei Raumtemperatur angeordnet.

## Patentansprüche

1. Verfahren zur Ermittlung des Lebensdauerverbrauchs von thermisch und/oder mechanisch hoch beanspruchten Bauteilen, insbesondere von thermisch und/oder mechanisch hoch beanspruchten Rohren, umfassend die Berechnung des Bauteilverhaltens unter Anwendung eines Rechenmodells unter Berücksichtigung der tatsächlichen thermischen und mechanischen Belastungen des Bauteils sowie einer gegebenen Werkstofffestigkeit als Randbedingungen des Modells, wobei das tatsächliche Dehnungsverhalten des Bauteiles mittels wenigstens eines auf dem Bauteil angebrachten Dehnungssensors während der Beanspruchungsphasen gemessen wird und die als Randbedingung im Rechenmodell verwendete Werkstofffestigkeit anhand des gemessenen Dehnungsverhaltens korrigiert wird.

2. Verfahren nach Anspruch 1, **dadurch gekennzeichnet, dass** die Dehnung des Werkstoffs mittels eines kapazitiven Dehnungssensors (5) gemessen wird.

3. Verfahren nach Anspruch 2, **dadurch gekennzeichnet, dass** der kapazitive Dehnungssensor (5) mit einer ersten Induktivität (6) zusammengeschaltet ist, zur Bildung eines Schwingkreises, wobei der Schwingkreis mittels einer zweiten Induktivität (7) zur Bestimmung der momentanen Resonanzfrequenz anregbar ist.

4. Verfahren nach Anspruch 3, **dadurch gekennzeichnet, dass** die Dehnung mittels einer Auswerteeinheit (8) ermittelt wird.

5. Verfahren nach einem der Ansprüche 1 bis 4, **dadurch gekennzeichnet, dass** die Dehnung des Werkstoffs bei oder nach einer Änderung der thermischen und/oder mechanischen Belastung des Bauteils gemessen wird.

6. Verfahren nach Anspruch 5, **dadurch gekennzeichnet, dass** das Verfahren kontinuierlich durchgeführt wird.

7. Messanordnung zur Bestimmung des Lebensdauerverbrauchs von thermisch und/oder mechanisch hoch beanspruchten Bauteilen nach einem der Ansprüche 1 bis 6, insbesondere von thermisch und/oder mechanisch hoch beanspruchten Rohren einer Kraftwerksanlage, umfassend:
• wenigstens einen kapazitiven Dehnungsmesssensor (5),
• eine erste Induktivität (6), die mit dem Dehnungsmesssensor (5) zu einem Schwingkreis zusammengeschaltet ist, und
• eine zweite Induktivität (7), die so angeordnet ist, dass sie die erste Induktivität (6) Anregen kann, und
• eine Auswerteeinheit (8), wobei die Auswerteeinheit (8) zur Durchführung des Verfahrens gemäß einem der Ansprüche 1 bis 6 ausgebildet ist und wobei die Auswerteeinheit (8) weiterhin so ausgebildet ist, dass sie den Schwingkreis umfassend den kapazitiven Dehnungsmesssensor (5) und die erste Induktivität (6) mit verschiedenen Frequenzen anregen kann, zur Ermittlung der aktuellen Resonanzfrequenz des Schwingkreises und einer daraus resultierenden Bestimmung der aktuellen Dehnung des beanspruchten Bauteils.

8. Messanordnung nach Anspruch 7, **dadurch gekennzeichnet, dass** der kapazitive Dehnungsmesssensor (5) wenigstens zwei mit Abstand zueinander auf einer Oberfläche des Bauteils zueinander angebrachte Platten oder Streifen umfasst.

9. Messanordnung nach Anspruch 7, **dadurch gekennzeichnet, dass** wenigstens zwei Dehnungsmesssensoren vorgesehen sind, deren kapazitive Elemente, vorzugsweise in Form von Platten oder Streifen, jeweils um 90° verdreht zueinander angebracht sind.

10. Messanordnung nach Anspruch 8 oder 9, **dadurch gekennzeichnet, dass** wenigstens die erste Induktivität (6) aus einem Werkstoff besteht, der gegenüber thermischen und/oder mechanischen Beanspruchungen langzeitstabil ist.

11. Messanordnung nach Anspruch 10, **dadurch gekennzeichnet, dass** wenigstens die erste Induktivität (6) aus einem nickellegierten Draht und einem keramischen Werkstoff als Isolator hergestellt ist.

## Claims

1. Method for determining service life consumption of components subjected to high thermal and/or mechanical loads, in particular pipes subjected to high thermal and/or mechanical loads, comprising the calculation of the component response by applying a computational model, taking into account the actual thermal and mechanical loads of the component and also a given material strength as boundary conditions of the model, wherein the actual strain response of the component during the loading phases is measured by means of at least one strain sensor attached to the component, and the material strength used as boundary condition in the computational model is corrected by using the measured strain response.

2. Method according to Claim 1, **characterized in that** the strain of the material is measured by means of a capacitive strain sensor (5).

3. Method according to Claim 2, **characterized in that** the capacitive strain sensor (5) is wired together with a first inductor (6) in order to form a resonant circuit, wherein the resonant circuit can be excited by means of a second inductor (7) in order to determine the instantaneous resonant frequency.

4. Method according to Claim 3, **characterized in that** the strain is determined by means of an evaluation unit (8).

5. Method according to one of Claims 1 to 4, **characterized in that** the strain of the material is measured during or after a change in the thermal and/or mechanical loading of the component.

6. Method according to Claim 5, **characterized in that** the method is carried out continuously.

7. Measuring arrangement for determining service life consumption of components subjected to high thermal and/or mechanical loads according to one of Claims 1 to 6, in particular pipes subjected to high thermal and/or mechanical loads in a power plant, comprising:
• at least one capacitive strain sensor (5),
• a first inductor (6), which is wired together with the strain sensor (5) to form a resonant circuit, and
• a second inductor (7), which is arranged such that it is able to excite the first inductor (6), and
• an evaluation unit (8), wherein the evaluation unit (8) is designed to carry out the method according to one of Claims 1 to 6, and wherein the evaluation unit (8) is also designed such that it is able to excite the resonant circuit comprising the capacitive strain sensor (5) and the first inductor (6) with various frequencies, for the determination of the current resonant frequency of the resonant circuit and for a determination resulting therefrom of the current strain of the component subjected to loading.

8. Measuring arrangement according to Claim 7, **characterized in that** the capacitive strain sensor (5) comprises at least two plates or strips attached in relation to one another on a surface of the component at a distance from one another.

9. Measuring arrangement according to Claim 7, **characterized in that** at least two strain sensors are provided, the capacitive elements of which, preferably in the form of plates or strips, are respectively attached so as to be rotated by 90° in relation to one another.

10. Measuring arrangement according to Claim 8 or 9, **characterized in that** at least the first inductor (6) consists of a material with long-term stability with respect to thermal and/or mechanical loads.

11. Measuring arrangement according to Claim 10, **characterized in that** at least the first inductor (6) is produced from a nickel-alloy wire and a ceramic material as insulator.

## Revendications

1. Procédé de détermination de la consommation de durée de vie de composants à forte sollicitation thermique et/ou mécanique, notamment de tubes à forte sollicitation thermique et/ou mécanique, comprenant le calcul du comportement des composants par utilisation d'un modèle de calcul en prenant en compte des charges thermiques et mécaniques effectives du composant ainsi qu'une résistance de matériau définie en tant que conditions aux limites du modèle, dans lequel le comportement en allongement du composant est mesuré au moyen d'au moins un capteur d'allongement placé sur le composant pendant les phases de sollicitation et la résistance de matériau utilisée en tant que conditions aux limites dans le modèle de calcul est corrigée sur la base du comportement en allongement mesuré.

2. Procédé selon la revendication 1, **caractérisé en ce que** l'allongement du matériau est mesuré au moyen d'un capteur d'allongement capacitif (5).

3. Procédé selon la revendication 2, **caractérisé en ce que** le capteur d'allongement capacitif (5) est connecté en commun avec une première inductance (6) pour former un circuit oscillant, dans lequel le circuit oscillant peut être attaqué au moyen d'une seconde inductance (7) pour déterminer la fréquence de résonance instantanée.

4. Procédé selon la revendication 3, **caractérisé en ce que** l'allongement est déterminé au moyen d'une unité d'évaluation (8).

5. Procédé selon l'une quelconque des revendications 1 à 4, **caractérisé en ce que** l'allongement du matériau est mesuré pendant ou après une modification de la charge thermique et/ou mécanique du composant.

6. Procédé selon la revendication 5, **caractérisé en ce que** le procédé est mis en oeuvre en continu.

7. Dispositif de mesure destiné à déterminer la consommation de durée de vie de composants à forte sollicitation thermique et/ou mécanique selon l'une quelconque des revendications 1 à 6, notamment de tubes à forte sollicitation thermique et/ou mécanique, comprenant :
- au moins un capteur de mesure d'allongement capacitif (5),
- une première inductance (6) qui est interconnectée avec le capteur de mesure d'allongement (5) pour former un circuit oscillant, et
- une seconde inductance (7) qui est agencée de manière à ce qu'elle puisse attaquer la première inductance (6), et
- une unité d'évaluation (8), l'unité d'évaluation (8) étant conçue pour mettre en oeuvre le procédé selon l'une quelconque des revendications 1 à 6 et l'unité d'évaluation (8) étant en outre conçue de manière à ce qu'elle puisse attaquer le circuit oscillant comprenant le capteur de mesure d'allongement capacitif (5) et la première inductance (6) à des fréquences différentes afin de déterminer la fréquence de résonance effective du circuit oscillant et de déterminer à partir de celle-ci l'allongement effectif du composant sollicité.

8. Dispositif de mesure selon la revendication 7, **caractérisé en ce que** le capteur d'allongement capacitif (5) comprend au moins deux plaques ou bandes placées de manière espacée l'une de l'autre sur une surface du composant.

9. Dispositif de mesure selon la revendication 7, **caractérisé en ce qu'**il est prévu au moins deux capteurs de mesure d'allongement dont les éléments capacitifs, qui sont de préférence sous forme de plaques ou de bandes, sont respectivement placés de manière tournée l'un par rapport à l'autre de 90°.

10. Dispositif de mesure selon la revendication 8 ou 9, **caractérisé en ce qu'**au moins la première inductance (6) est constituée d'un matériau qui est stable longitudinalement vis-à-vis de sollicitations thermiques et/ou mécaniques.

11. Dispositif de mesure selon la revendication 10, **caractérisé en ce que** l'au moins une inductance (6) est réalisée à partir d'un fil d'alliage de nickel et d'un matériau céramique en tant qu'isolant.
